# EUROPÄISCHE PATENTSCHRIFT

(11) **EP 3 981 749 B1**
(45) Veröffentlichungstag und Bekanntmachung des Hinweises auf die Patenterteilung: **08.01.2025**
(21) Anmeldenummer: 21201862.6
(22) Anmeldetag: 11.10.2021
(51) Int. Cl.: C03B 23/035, C03B 40/00

(54) **UMFORMVORICHTUNG ZUM UMFORMEN EINES DÜNNGLASES UND VERFAHREN**
SHAPING DEVICE FOR SHAPING THIN GLASS AND METHOD
DISPOSITIF DE FORMAGE PERMETTANT DE FORMER UN VERRE MINCE ET PROCÉDÉ

(30) Priorität: 12.10.2020 DE 102020126723
(43) Veröffentlichungstag der Anmeldung: 13.04.2022
(73) Patentinhaber: Fraunhofer-Gesellschaft zur Förderung der angewandten Forschung e.V., 80686 München (DE)
(72) Erfinder: Vogel, Paul-Alexander, 52074 Aachen (DE); Birkle, Matthäus, 52074 Aachen (DE)
(74) Vertreter: Heeschen Pültz Patentanwälte PartGmbB

(56) Entgegenhaltungen:
- EP-A1- 0 838 438
- EP-A1- 2 321 112
- US-A- 3 473 909

## Beschreibung

Die Erfindung betrifft eine Umformvorrichtung zum Umformen eines Dünnglases, ein Dünnglasprodukt und ein Verfahren zum Umformen eines Dünnglases.

Umformvorrichtungen zum Umformen eines Dünnglases sind grundsätzlich bekannt. Derartige Umformvorrichtungen werden zur Umformung von Glasrohlingen mit einer geringen Stärke verwendet, um eine vordefinierte Geometrie zu erzeugen. Derartig umgeformte Dünngläser können beispielsweise als Bildschirmabdeckungen für Smartphones, Bedienfelder im Automobilinterieur oder als Kapselungsgläser in medizinischen Sensoren eingesetzt werden.

Für verschiedenste Anwendungen kann es erforderlich sein, dass das herzustellende Dünnglas perforiert ist. Perforierte Dünngläser weisen Durchgangsöffnungen auf. Perforationen an Dünngläsern führen beispielsweise dazu, dass das vakuumunterstützte Tiefziehen nicht bzw. lediglich bedingt möglich ist, da ein kavitätsseitiges Vakuum aufgrund der Perforation oftmals nicht ausreichend einstellbar ist. Darüber hinaus kann das vakuumunterstützte Tiefziehen zu einer qualitätsmindernden Reduktion der Stärke des Dünnglases führen, da das Dünnglas in einem Spannrahmen eingespannt wird und während der Umformung abschnittsweise durchrutscht, sodass das Dünnglas relativ zu dem Spannrahmen bewegt wird. Perforierte Dünngläser können ferner mit einem Biege- oder Senkprozess umgeformt werden.

Darüber hinaus ist die Herstellung von Bauteilen aus Dünnglas mit komplex ausgebildeten Kantengeometrien nicht oder nur bedingt möglich, da in der Regel kein luftdichter Abschluss am Formwerkzeug möglich ist. Ferner führen unterschiedliche Krümmungsradien verschiedener Umformachsen dazu, dass kein Unterdruck-geeigneter Hohlraum erzeugbar ist. Dies ist auch der Fall, wenn lediglich eine Umformachse vorgesehen ist. Darüber hinaus sind die bekannten Pressverfahren regelmäßig nicht anwendbar, da diese zu derartigen Oberflächendegenerationen führen, dass die herzustellenden Bauteile nicht für Anforderungen mit hohen Oberflächenqualitäten einsetzbar sind oder umfangreiche und nicht wirtschaftliche Nachbearbeitungen erforderlich sind.

Schwerkraftbasierte Umformverfahren sind in der Regel lediglich dann einsetzbar, wenn große Biegeradien und geringe Formgenauigkeiten erzeugt werden sollen. Diese Einschränkung kann zwar durch eine hohe Umformtemperatur zumindest teilweise überwunden werden, jedoch erhöht die hohe Umformtemperatur den Verschleiß an den eingesetzten Umformwerkzeugen. Darüber hinaus sind hohe Anforderungen häufig lediglich mit isothermen Prozessen herstellbar, wobei sich die langen Prozesszeiten negativ auf die Wirtschaftlichkeit auswirken.

Die CA2994359A1 beschreibt ein Verfahren zur Umformung einer Glasplatte, die zwischen einer Kavität und einer Membran angeordnet wird, sodass die erwärmte Glasplatte mittels der Membran in die Kavität einformbar ist. Die Verformung der Membran wird durch ein druckbeaufschlagtes und temperiertes Fluid ermöglicht. Ein Nachteil dieses Verfahrens ist, dass die hergestellte Qualität der umgeformten Glasplatte keinen hohen Anforderungen genügt. Insbesondere werden auf der Oberfläche Schlieren erzeugt, die eine Nachbearbeitung erforderlich machen.

Die DE69732277T2 und die DE4104086C1 beschreiben jeweils Glasumformverfahren mit einem elastischen Umformelement, jedoch führen diese Verfahren ebenfalls zu Oberflächendegenerationen, insbesondere Schlieren, die eine Nachbearbeitung der hergestellten Glasbauteile erforderlich machen.

Die EP 0 838 438 A1 offenbart eine Vorrichtung zum Biegen einer Glasplatte, die in einen formbaren Zustand geheizt wurde, umfassend eine feste Formoberfläche und eine Presseinheit zum Pressen der aufgeheizten Platte. Die EP 2 321 112 A1 offenbart ein Verfahren zum Herstellen von Glasrahmen erhalten durch Bretter aus Kunststoff oder Verbundmaterial. Die US 3473909 A offenbart ein Verfahren zum Umformen von Kunststoffartikeln.

Es ist daher eine Aufgabe der vorliegenden Erfindung, eine Umformvorrichtung zum Umformen eines Dünnglases, ein Dünnglasprodukt und ein Verfahren zum Umformen eines Dünnglases bereitzustellen, die einen oder mehrere der genannten Nachteile vermindern oder beseitigen. Insbesondere ist es eine Aufgabe der Erfindung, eine Lösung bereitzustellen, die die Herstellung eines umgeformten Dünnglases ohne Nachbearbeitung ermöglicht.

Gemäß einem ersten Aspekt wird diese Aufgabe gelöst durch eine Umformvorrichtung zum Umformen, insbesondere zum nicht-isothermen Umformen, eines Dünnglases, umfassend eine Umformeinheit mit einer Kavität zum Umformen des Dünnglases, eine Membraneinheit mit einer verformbaren Membran, die eine der Kavität zugewandte erste Membranseite und eine der Kavität abgewandte zweite Membranseite aufweist, eine Fluideinstellungsvorrichtung zur Einstellung mindestens einer Fluideigenschaft eines der Membraneinheit bereitzustellenden Fluides, wobei das Dünnglas zwischen der ersten Membranseite und der Kavität anordenbar ist, und wobei die Membraneinheit angeordnet und ausgebildet ist, um die zweite Membranseite der Membran mittels des Fluides mit einem Druck zu beaufschlagen, sodass das Dünnglas mittels der Membran in die Kavität einformbar ist, gekennzeichnet durch eine Steuerungsvorrichtung, die eingerichtet ist, die Fluideinstellungsvorrichtung derart anzusteuern und/oder zu regeln, dass ein Druckverlauf des Drucks mit einem Druckaufbauabschnitt, einem Umformdruckabschnitt, einem Haltedruckabschnitt und einem Druckabbauabschnitt in dieser Reihenfolge zeitlich aufeinanderfolgend zu steuern und/oder zu regeln, wobei die Fluideigenschaft ein Druckverlauf des Drucks ist, und/oder gekennzeichnet dadurch, dass die Fluideigenschaft ein Temperaturverlauf der Temperatur ist.

Der Erfindung lag unter anderem die Erkenntnis zugrunde, dass eine wirtschaftliche Herstellung von Bauteilen aus Dünnglas insbesondere mit nicht-isothermen Prozessen möglich ist. Ein nicht-isothermer Prozess zeichnet sich insbesondere dadurch aus, dass das Formwerkzeug und das umzuformende Dünnglas unterschiedliche Temperaturen aufweisen, wobei in der Regel das Dünnglas und die Umformeinheit jeweils zeitlich variable Temperaturgradienten aufweisen. Die Zeit zur Umformung eines Dünnglases mit einem nicht-isothermen Prozess kann beispielsweise weniger als 60 Sekunden erfordern. Um auch hochgenaue Dünnglasprodukte herzustellen, kann die Umformvorrichtung auch zum isothermen Umformen eingesetzt werden. Dies kann insbesondere bevorzugt sein, wenn ein Peak-to-valley Formfehler von weniger als 1 µm erforderlich ist.

Die Umformung eines Dünnglases mit einem nicht-isothermen Prozess erfordert insbesondere eine präzise Einstellung der Prozessparameter. Die Erfinder haben herausgefunden, dass insbesondere die Einstellung mindestens einer Fluideigenschaft des Fluides zur Beaufschlagung der zweiten Membranseite mit einem Druck die Qualität des Umformprozesses beeinflusst. Lediglich mit definiert eingestellten Fluideigenschaften des Fluides ist eine Umformung des Dünnglases derart möglich, dass keine Oberflächendegenerationen entstehen und somit keine Nachbearbeitung, beispielsweise mittels eines Polierprozesses, erforderlich ist.

Ein Dünnglas wird auch als Glasplatte bezeichnet. Das Dünnglas kann durch eine Ebene und/oder flache Ausbildung oder durch eine definierte Halbzeuggeometrie gekennzeichnet sein. Das Dünnglas kann beispielsweise ein profiliertes Glas, ein Flachglas und/oder ein Glashalbzeug sein. Die Stärke eines Dünnglases ist üblicherweise um ein Vielfaches geringer als die Erstreckungen, die orthogonal zu der Stärke ausgerichtet sind. Das Dünnglas kann beispielsweise eine Stärke zwischen 200 µm und 5 mm, insbesondere zwischen 500 µm und 3 mm, aufweisen. Die Umformvorrichtung ist insbesondere auch zum Umformen von perforiertem Dünnglas ausgebildet. Ein perforiertes Dünnglas weist mindestens eine Durchgangsöffnung auf. Ein verformbares Dünnglas zeichnet sich üblicherweise durch eine hohe Temperatur aus, die abhängig von dem Glasmaterial ist. Verformbar ist ein auf eine Umformtemperatur aufgeheiztes Dünnglas. Das umgeformte und erstarrte Dünnglas wird vorzugsweise als Dünnglasprodukt bezeichnet.

Die Umformvorrichtung ist insbesondere zum nicht-isothermen Umformen des verformbaren Dünnglases ausgebildet. Die Umformeinheit und die Membraneinheit sind vorzugsweise relativ zueinander bewegbar, wobei beispielsweise eine vertikale Beabstandung der Umformeinheit zu der Membraneinheit veränderbar ausgebildet ist, sodass das Dünnglas einlegbar und vorzugsweise erwärmbar ist. Die Membran ist vorzugsweise angeordnet und ausgebildet, um eine der Kavität abgewandte Glasseite des Dünnglases mit einem Druck zu beaufschlagen.

In einer bevorzugten Ausführungsvariante der Umformvorrichtung ist vorgesehen, dass die Membran ein Glaskontaktmaterial aufweist oder aus einem Glaskontaktmaterial besteht. Das Glaskontaktmaterial kann beispielsweise Platin, Molybdän, Iridium und/oder gegebenenfalls Gold sein oder eines oder mehrere dieser Materialien aufweisen. Die Membran kann beispielsweise eine Stärke von 10 µm bis 1 mm, insbesondere zwischen 50 µm und 500 µm, aufweisen. Darüber hinaus ist es bevorzugt, dass die Membran elastisch ausgebildet ist. Es ist insbesondere bevorzugt, dass die Membraneinheit, die Umformeinheit und/oder die Membran derart ausgebildet sind, dass während des Umformens des verformbaren Dünnglases keine plastische Verformung der Membran auftritt.

In einer weiteren bevorzugten Ausführungsvariante ist vorgesehen, dass die Membran eine erste der Kavität zugewandte Membranschicht und eine zweite der Kavität abgewandte Membranschicht aufweist, wobei die erste Membranschicht ein Glaskontaktmaterial umfasst oder aus diesem besteht und/oder wobei die zweite Membranschicht ein Elastomermaterial aufweist oder aus einem Elastomermaterial besteht. Eine derartige mehrschichtige Membran hat den Vorteil, dass die unterschiedlichen Membraneigenschaften der Membranschichten genutzt werden können. Beispielsweise kann die erste Membranschicht ein für den Kontakt mit einem Glas ausgebildetes Material aufweisen, sodass die erzeugte Oberfläche am Dünnglas definierten Anforderungen entspricht.

Ferner kann die dem Dünnglas abgewandte zweite Membranschicht insbesondere auf elastische Membraneigenschaften und/oder auf wärmeleitende Membraneigenschaften ausgelegt sein. Es ist darüber hinaus bevorzugt, dass zwischen der ersten Membranschicht und der zweiten Membranschicht eine Isolierschicht, insbesondere eine Wärmeisolierschicht, angeordnet ist. Die Isolierschicht ist vorzugsweise angeordnet und ausgebildet, um die zweite Membranschicht von der ersten Membranschicht und/oder von dem verformbaren Dünnglas thermisch zu isolieren, wobei die zweite Membranschicht insbesondere vor thermischer Schädigung geschützt wird. Die Isolierschicht kann beispielsweise aus Keramik bestehen oder Keramik umfassen. Ferner kann die Isolierschicht ein hochtemperaturbeständiges Gewebe, beispielsweise aus oder mit Glasfasern, umfassen. Darüber hinaus kann die Membran auch vier oder mehr Membranschichten aufweisen.

Die erste und zweite Membranschicht und gegebenenfalls die Isolierschicht können im Wesentlichen lose aneinander angeordnet sein. Alternativ oder teilweise ergänzend können diese Schichten auch miteinander verbunden sein. Beispielsweise kann die zweite Membranschicht mit dem Glaskontaktmaterial beschichtet sein.

Der Erfindung lag ferner die Erkenntnis zugrunde, dass mit einem definierten Druckverlauf besonders hohe Qualitäten des umgeformten Dünnglases bzw. des Dünnglasproduktes erzielbar sind. Insbesondere ist es bevorzugt, dass der Druckverlauf im Wesentlichen keine quasi-instantanen Druckänderungen aufweist. Insbesondere ist es bevorzugt, dass die quasi-instantanen Druckänderungen kleiner 100 mbar, insbesondere kleiner als 50 mbar betragen. Keine quasi-instantanen Druckänderungen liegen insbesondere dann vor, wenn der Druckverlauf im Wesentlichen Sprungstellen-frei ist.

Ferner ist es bevorzugt, dass der Druckverlauf einen Druckaufbauabschnitt, einen Umformdruckabschnitt, einen Haltedruckabschnitt und/oder einen Druckabbauabschnitt aufweist, die vorzugsweise in dieser Reihenfolge zeitlich aufeinanderfolgen. Im Druckaufbauabschnitt wird der Druck linear und/oder e-funktionsförmig bis zu einem Umformdruck aufgebaut. Der Umformdruckabschnitt zeichnet sich dadurch aus, dass der Druck im Wesentlichen konstant ist und dem Umformdruck entspricht oder der Druck um den Umformdruck oszilliert. Nachdem das Dünnglas umgeformt wurde, wird der Druck vorzugsweise auf einen Haltedruck abgesenkt, wobei vorzugsweise der Druck im Haltedruckabschnitt kontant dem Haltedruck entspricht. Das Absenken auf den Haltedruck erfolgt vorzugsweise linear und/oder e-funktionsförmig. Mit dem Haltedruck, der insbesondere geringer als der Umformdruck und höher als ein Umgebungsdruck ist, wird eine Schrumpfung des umgeformten Dünnglases vermieden oder verringert. Im Druckabbauabschnitt wird der Druck linear und/oder e-funktionsförmig abgesenkt, insbesondere im Wesentlichen auf Umgebungsdruck. Es ist bevorzugt, dass die im Folgenden erläuterte Steuerungsvorrichtung eingerichtet ist, einen Druckverlauf des Drucks mit einem, zwei oder mehreren der im Vorherigen beschriebenen Merkmale zu steuern und/oder zu regeln, insbesondere durch eine Ansteuerung und/oder Regelung der Fluideinstellungsvorrichtung. Darüber hinaus lag der Erfindung die Erkenntnis zugrunde, dass schnelle Temperaturveränderungen des Fluides erforderlich sein können, um die Prozess- und Produktqualität zu steigern.

Eine weitere bevorzugte Ausführungsvariante der Umformvorrichtung zeichnet sich dadurch aus, dass die Membraneinheit einen Druckraum aufweist, der von der Membran auf einer der Kavität zugewandten Seite im Wesentlichen fluiddicht abgeschlossen wird. Ein von der Membran abgeschlossener Druckraum hat den Vorteil, dass die Fluideigenschaften innerhalb des Druckraumes einstellbar sind und somit ein definierter Druck auf die Membran ausübbar ist, wobei ferner eine definierte Temperatur einstellbar ist. Darüber hinaus ist es bevorzugt, dass ein Fluideinlass mit dem Druckraum derart fluidisch gekoppelt ist, dass ein Fluid in den Druckraum einleitbar ist. Ferner ist es bevorzugt, dass die Fluideinstellungsvorrichtung fluidisch mit dem Druckraum gekoppelt ist, insbesondere mittels des Fluideinlasses.

Eine weitere bevorzugte Ausführungsvariante der Umformvorrichtung zeichnet sich dadurch aus, dass die Fluideinstellungsvorrichtung ein Druckeinstellventil aufweist, das eingerichtet ist, um einen vorbestimmten Druck im Druckraum einzustellen. Das Druckeinstellventil ist vorzugsweise mit einem Fluidauslass gekoppelt, sodass der Druck im Druckraum über ein Entweichen des Fluids aus dem Druckraum einstellbar ist. Dies hat den Vorteil, dass die Fluidzuführung nicht anzusteuern ist und die Reaktionszeit zum Einstellen des Drucks im Druckraum gering ist, sodass eine geringe Verzögerung ab dem Zeitpunkt der Ansteuerung des Druckeinstellventils ermöglicht wird. Der vorbestimmte Druck kann beispielsweise von einer im Folgenden erläuterten Steuerungsvorrichtung vorbestimmt, ermittelt, gesteuert und/oder geregelt werden.

Es ist darüber hinaus bevorzugt, dass das Druckeinstellventil als Proportionalventil zur Einstellung eines vordefinierten Druckverlaufs, insbesondere einer Druckänderungsrate, ausgebildet ist. Es wurde herausgefunden, dass eine hohe Bauteilqualität insbesondere mit einer definierten Druckänderungsrate ermöglicht wird. Insbesondere sprungartige Druckänderungen führen zu geringeren Oberflächenqualitäten. Darüber hinaus können sprungartige Druckänderungen zu einem Riss in der Membran führen. Insbesondere sind solche Ventile zu vermeiden, die lediglich zwei Stellungen, nämlich Auf oder Zu, aufweisen.

In einer weiteren bevorzugten Ausführungsvariante der Umformvorrichtung ist vorgesehen, dass die Membraneinheit eine Membranhalterung aufweist, die angeordnet und ausgebildet ist, die Membran, insbesondere einen Membranrandbereich, in einer vorbestimmten Position zu positionieren und vorzugsweise einen fluiddichten Abschluss des Druckraumes auszubilden. Das Positionieren der Membran in einer vorbestimmten Position mittels der Membranhalterung erfolgt insbesondere durch ein Einspannen des Membranrandbereichs der Membran.

Die Membranhalterung ist insbesondere angeordnet und ausgebildet, dass die Membran mit einem von der Membran verschiedenen Material eingespannt ist. Insbesondere ist es bevorzugt, dass die Membranhalterung derart metallfrei ausgebildet ist, dass zwischen der Membran und der Membranhalterung keine Metallpaarung ausgebildet wird. Es ist insbesondere bevorzugt, dass die Membran mit einem Material aus der Glimmergruppe eingespannt ist. Materialien aus der Glimmergruppe sind insbesondere Schichtsilikate.

Es ist darüber hinaus bevorzugt, dass die Umformeinheit Entlüftungsöffnungen aufweist, sodass ein Fluid, insbesondere Luft, das zwischen dem Dünnglas und einer Oberfläche der Kavität eingeschlossen ist, aus der Kavität entweichen kann. Darüber hinaus ermöglichen Entlüftungsöffnungen eine hybride Umformung mit der Membran und einem Unterdruck. Mit dem Unterdruck zwischen Dünnglas und Kavität kann beispielsweise eine Vorumformung des Dünnglases erfolgen, das anschließend mit der Membran in die Kavität eingeformt wird. Vorzugsweise ist die Umformvorrichtung eingerichtet, zunächst einen Unterdruck zwischen dem Dünnglas und der Kavität zu erzeugen und anschließend das Dünnglas mit der Membran in die Kavität einzuformen.

Eine weitere bevorzugte Ausführungsvariante der Umformvorrichtung zeichnet sich dadurch aus, dass die Fluideinstellungsvorrichtung eine Verdichtungseinheit zum Verdichten des Fluids und/oder eine erste Temperiereinheit zur Erzeugung eines ersten Fluids mit einer ersten Temperatur aufweist.

Es ist insbesondere bevorzugt, dass die erste Temperiereinheit stromabwärts von der Verdichtungseinheit angeordnet ist. Das Fluid erreicht vorzugsweise zunächst die Verdichtungseinheit und wird dort verdichtet. Anschließend gelangt das Fluid vorzugsweise stromabwärts zu der ersten Temperiereinheit und wird dort auf eine erste Temperatur temperiert. Das erste Fluid kann insbesondere einen vordefinierten Druck und/oder eine vordefinierte erste Temperatur aufweisen. Die erste Temperatur kann beispielsweise 200° C bis 2.000° C, insbesondere 400° C bis 900° C, aufweisen.

In einer weiteren bevorzugten Ausführungsvariante der Umformvorrichtung ist vorgesehen, dass die Fluideinstellungsvorrichtung eine zweite Temperiereinheit zur Erzeugung eines zweiten Fluids mit einer zweiten Temperatur, die niedriger als die erste Temperatur ist, aufweist. Die zweite Temperiereinheit ist vorzugsweise stromabwärts von der Verdichtungseinheit angeordnet. Es ist darüber hinaus bevorzugt, dass die zweite Temperiereinheit parallel zur ersten Temperiereinheit geschaltet ist. Das der zweiten Temperiereinheit zugeführte Fluid wird vorzugsweise stromabwärts von der Verdichtungseinheit und stromaufwärts von der ersten Temperiereinheit gezapft.

Es ist darüber hinaus bevorzugt, dass die Fluideinstellungsvorrichtung eine Mischeinheit zum Mischen des ersten Fluids und des zweiten Fluids aufweist. Das von der ersten Temperiereinheit temperierte erste Fluid kann auch als Primärfluid bezeichnet werden. Dieses Fluid tritt in die Mischeinheit ein. Mittels des zweiten Fluides kann innerhalb der Mischeinheit ein definierte Fluideigenschaften aufweisendes Fluid auf Grundlage des ersten Fluids und des zweiten Fluids gemischt werden.

Beispielsweise kann die Temperatur des in der Mischeinheit sich befindlichen Fluides durch das zweite Fluid reduziert werden. Es ist bevorzugt, dass der Mischer isobar ausgebildet ist. Das zweite Fluid weist vorzugsweise den gleichen Druck wie das erste Fluid auf. Durch eine derartig ausgebildete Fluideinstellungsvorrichtung wird die Einstellung der Temperatur des Fluides in einer kurzen Zeitdauer möglich.

In einer weiteren bevorzugten Ausführungsvariante der Umformvorrichtung ist vorgesehen, dass diese eine Steuerungsvorrichtung umfasst, die eingerichtet ist, die Fluideinstellungsvorrichtung derart zu steuern, dass das in den Druckraum geleitete Fluid einen vorbestimmten Druck und/oder eine vorbestimmte Temperatur aufweist. Darüber hinaus kann die Steuerungsvorrichtung eingerichtet sein, die Fluideinstellungsvorrichtung derart zu regeln, dass das in den Druckraum geleitete Fluid einen vorbestimmten Druck und/oder eine vorbestimmte Temperatur aufweist. Es ist insbesondere bevorzugt, dass die Steuerungsvorrichtung den Druck mit einem Druckverlauf steuert und/oder regelt, der den Druckaufbauabschnitt, den Umformdruckabschnitt, den Haltedruckabschnitt und/oder den Druckabbauabschnitt aufweist, wobei diese vorzugsweise in dieser Reihenfolge zeitlich aufeinanderfolgen.

Es ist darüber hinaus bevorzugt, dass die Temperatur der Kavität erfasst wird, insbesondere mittels eines Kavitätstemperatursensors. Auf Basis der erfassten Temperatur der Kavität kann ein Kontakt der Kavität mit einem verformbaren, insbesondere heißen, Dünnglas detektiert werden. Dieser detektierte Kontakt kann beispielsweise zur Steuerung und/oder Regelung des Druckverlaufs genutzt werden, wobei insbesondere der detektierte Kontakt einen Übergang von dem Umformdruckabschnitt zu dem Haltedruckabschnitt definieren kann.

Darüber hinaus kann die Umformvorrichtung einen Volumenstromsensor zur Ermittlung eines Volumenstroms des in den Druckraum einströmenden und/oder des aus dem Druckraum ausströmenden Fluids aufweisen. Die Steuerungsvorrichtung ist insbesondere eingerichtet, um den Volumenstrom auf Basis eines von dem Volumenstromsensor bereitgestellten Volumenstromwertes zu regeln, sodass ein vorbestimmter Druck und/oder Druckverlauf einstellbar ist.

Es ist insbesondere bevorzugt, dass die Temperatur des Fluids während einer Umformung hoch ist und nach einer Umformung niedrig, sodass ein Erstarren des Dünnglases unterstützt wird. Die Steuerungsvorrichtung ist vorzugsweise mit der ersten Temperiereinheit, mit der zweiten Temperiereinheit, mit der Verdichtungseinheit, mit dem Druckeinstellventil und/oder mit der Mischeinheit signaltechnisch gekoppelt. Die Steuerungsvorrichtung ist insbesondere eingerichtet, um die erste Temperatur und/oder die zweite Temperatur des ersten Fluides beziehungsweise des zweiten Fluides mittels der ersten Temperiereinheit und/oder mittels der zweiten Temperiereinheit einzustellen.

Darüber hinaus ist die Steuerungsvorrichtung vorzugsweise eingerichtet, um die Verdichtungseinheit derart zu steuern, um einen vordefinierten Druck des Fluides einzustellen. Des Weiteren kann die Steuerungsvorrichtung eingerichtet sein, um die Mischeinheit derart zu steuern, dass ein Volumenstrom des ersten Fluides und ein Volumenstrom des zweiten Fluides in die Mischeinheit derart erfolgt, dass das in der Mischeinheit gebildete Fluid aus dem ersten Fluid und dem zweiten Fluid eine vorbestimmte Temperatur aufweist.

Darüber hinaus kann die Umformvorrichtung in einer vorteilhaften Fortbildung derart ausgebildet sein, dass die Steuerungsvorrichtung eingerichtet ist, um eine Temperaturdifferenz zwischen einer Ist-Temperatur des Fluids und einer Soll-Temperatur des Fluids zu ermitteln und die Ist-Temperatur des Fluids durch eine Temperierung einzustellen, insbesondere zu erhöhen oder zu reduzieren, wenn die Temperaturdifferenz eine vorbestimmte Temperaturdifferenz übersteigt, insbesondere durch Ansteuerung der ersten Temperiereinheit, der zweiten Temperiereinheit und/oder der Mischeinheit. Die Ist-Temperatur wird vorzugsweise stromabwärts von der Mischeinheit und/oder in dem Druckraum ermittelt, insbesondere mittels eines Temperatursensors in der Mischeinheit, im Fluideinlass und/oder im Druckraum.

In einer weiteren bevorzugten Ausführungsvariante umfasst die Umformvorrichtung eine Prüfvorrichtung, die vorzugsweise separat von der Umformeinheit angeordnet ist. Die Prüfvorrichtung ist vorzugsweise zur Ermittlung von Glaseigenschaften des umgeformten Dünnglases bzw. des Dünnglasproduktes eingerichtet. Die Glaseigenschaft kann beispielsweise eine Formgenauigkeit, ein spezifisches Volumen und/oder ein, zwei oder mehrere Brechungsindizes sein.

Die Prüfvorrichtung und die Umformeinheit sind vorzugsweise derart angeordnet, dass das umgeformte Dünnglas bzw. das Dünnglasprodukt von der Umformvorrichtung zu der Prüfvorrichtung verbringbar ist.

Es ist ferner bevorzugt, dass die Prüfvorrichtung mit der Steuerungsvorrichtung signaltechnisch zur Übertragung von Daten gekoppelt ist, wobei die Steuerungsvorrichtung eingerichtet ist, auf Basis eines eine Glaseigenschaft charakterisierenden Glaseigenschaftswertes die Fluidbereitstellungsvorrichtung derart zu steuern, dass diese Glaseigenschaft bei einem nachfolgend umzuformenden Dünnglas beeinflusst wird. Ferner ist es bevorzugt, dass die Steuerungsvorrichtung zwei oder mehr Glaseigenschaftswerte zur Steuerung der Fluidbereitstellungvorrichtung berücksichtigt.

Darüber hinaus ist es bevorzugt, dass die Steuerungsvorrichtung einen, zwei oder mehr Glaseigenschaftswerte zur statistischen Prozessüberwachung verwendet. Des Weiteren kann die Umformvorrichtung eingerichtet sein, die ermittelte Glaseigenschaft bzw. die ermittelten Glaseigenschaften dem entsprechenden umgeformten Dünnglas bzw. Dünnglasprodukt zuzuordnen. Ferner kann die Prüfvorrichtung eine Markiereinheit zum Markieren des Dünnglasproduktes aufweisen. Die Markiereinrichtung ist vorzugsweise angeordnet und ausgebildet, um die Glaseigenschaft bzw. die Glaseigenschaften auf dem Dünnglasprodukt mittels einer Markierung abzubilden und/oder um eine Identifizierungsmarkierung anzubringen. Ergänzend oder alternativ kann die Markierung auf einer Verpackung und/oder elektronisch auf einer elektronischen Speichereinheit gespeichert werden.

Darüber hinaus kann die Steuerungsvorrichtung eingerichtet sein, um eine Druckdifferenz zwischen einem Ist-Druck des Fluides und einem Soll-Druck des Fluides zu ermitteln und den Ist-Druck des Fluides durch eine Druckveränderung, insbesondere durch Ansteuerung des Druckeinstellventils und/oder der Verdichtungseinheit, einzustellen, insbesondere zu erhöhen oder zu reduzieren, wenn die Druckdifferenz eine vorbestimmte Druckdifferenz übersteigt.

Die Steuerungsvorrichtung ist ferner vorzugsweise eingerichtet, um das Druckeinstellventil und/oder die Verdichtungseinheit derart zu steuern, dass ein Druckverlauf, insbesondere eine Druckänderungsrate, derart eingestellt wird, dass im Wesentlichen keine sprungartige Druckänderung erfolgt.

Darüber hinaus kann die Umformvorrichtung einen Temperatursensor umfassen, der eingerichtet ist, eine beziehungsweise die Ist-Temperatur des Fluids in und/oder stromabwärts von der Mischeinheit zu ermitteln, wobei die Steuerungsvorrichtung vorzugsweise eingerichtet ist, eine Temperaturdifferenz der Ist-Temperatur zu einer vordefinierten Soll-Temperatur zu ermitteln und bei Überschreiten einer vordefinierten Temperaturdifferenz die Fluideinstellungsvorrichtung derart anzusteuern, dass durch eine Reduktion der Ist-Temperatur die Temperaturdifferenz geringer als die vordefinierte Temperaturdifferenz eingestellt wird. Es ist ferner bevorzugt, dass die Steuerungsvorrichtung eingerichtet ist, die zweite Temperiereinheit anzusteuern, um die zweite Temperatur zu variieren, und/oder die Mischeinheit anzusteuern, um einen Volumenstrom des zweiten Fluids in die Mischeinheit zu steuern.

Darüber hinaus kann die Umformvorrichtung einen Drucksensor umfassen, der eingerichtet ist, einen beziehungsweise den Ist-Druck des Fluids in und/oder stromabwärts von der Mischeinheit zu ermitteln, wobei die Steuerungsvorrichtung vorzugsweise eingerichtet ist, eine Druckdifferenz des Ist-Drucks zu einem vordefinierten Soll-Druck zu ermitteln und bei Überschreiten einer vordefinierten Druckdifferenz die Fluideinstellungsvorrichtung derart anzusteuern, dass die Druckdifferenz geringer als die vordefinierte Druckdifferenz ist, wobei vorzugsweise die Steuerungsvorrichtung das Druckeinstellventil und/oder die Verdichtungseinheit ansteuert.

In einer weiteren bevorzugten Fortbildung der Umformvorrichtung ist vorgesehen, dass die Umformeinheit austauschbar angeordnet ist. Die Umformvorrichtung ist aufgrund ihrer Ausbildung mit einer austauschbaren Umformeinheit ausstattbar.

Eine weitere bevorzugte Ausführungsvariante der Umformvorrichtung zeichnet sich durch zwei oder mehr Kavitäten aus. Die Membran ist vorzugsweise angeordnet und ausgebildet, um ein in die zwei oder mehr Kavitäten einformbares Dünnglas und/oder zwei oder mehrere in die Kavitäten einformbare Dünngläser in die Kavitäten einzuformen. Es kann ferner bevorzugt sein, dass die zwei oder mehr Kavitäten und/oder die zwei oder mehr Dünngläser unterschiedliche Geometrien aufweisen.

Gemäß einem weiteren Aspekt wird die eingangs genannte Aufgabe gelöst durch ein Verfahren zum Umformen eines Dünnglases, insbesondere mit einer Umformvorrichtung nach einer der im Vorherigen beschriebenen Ausführungsvarianten, umfassend die Schritte: Anordnen eines verformbaren Dünnglases zwischen einer Umformeinheit mit einer Kavität und einer verformbaren Membran, sodass eine erste Membranseite dem Dünnglas zugewandt und eine zweite Membranseite dem Dünnglas abgewandt ist, Beaufschlagen der zweiten Membranseite mit einem Druck mittels eines Fluides, sodass das Dünnglas mittels der Membran in die Kavität eingeformt wird, und Einstellen mindestens einer Fluideigenschaft des Fluides, dadurch gekennzeichnet, dass die Fluideigenschaft ein Druckverlauf des Drucks ist und die Fluideinstellungsvorrichtung derart angesteuert wird und/oder geregelt wird, dass ein Druckverlauf des Drucks mit einem Druckaufbauabschnitt, einem Umformdruckabschnitt, einem Haltedruckabschnitt und einem Druckabbauabschnitt in dieser Reihenfolge zeitlich aufeinanderfolgend gesteuert und/oder geregelt wird und/oder dass die Fluideigenschaft ein Temperaturverlauf der Temperatur ist..

Das Einstellen der mindestens einen Fluideigenschaft des Fluides kann zu jedem Zeitpunkt des Verfahrens erfolgen. Das Einstellen kann insbesondere ein Steuern und/oder Regeln der Fluideigenschaft des Fluides umfassen oder sein.

Eine bevorzugte Ausführungsvariante des Verfahrens zeichnet sich dadurch aus, dass die Fluideigenschaft ein Druck, ein Druckverlauf des Drucks, eine Temperatur und/oder ein Temperaturverlauf der Temperatur des Fluides ist oder umfasst.

In einer weiteren bevorzugten Ausführungsvariante des Verfahrens ist vorgesehen, dass dieses die Schritte umfasst: Ermitteln einer Temperaturdifferenz zwischen einer Ist-Temperatur des Fluids und einer Soll-Temperatur des Fluids, und Einstellen, insbesondere Erhöhen oder Reduzieren, der Ist-Temperatur des Fluids durch eine Temperierung, wenn die Temperaturdifferenz eine vorbestimmte Temperaturdifferenz übersteigt. Das Ermitteln der Temperaturdifferenz umfasst vorzugsweise ein Erfassen der Ist-Temperatur und einen Abgleich dieser Ist-Temperatur mit der Soll-Temperatur.

Eine weitere bevorzugte Fortbildung des Verfahrens zeichnet sich dadurch aus, dass dieses die Schritte umfasst: Ermitteln einer Druckdifferenz zwischen einem Ist-Druck des Fluids und einem Soll-Druck des Fluids, und Einstellen, insbesondere Erhöhen oder Reduzieren, des Ist-Drucks des Fluids, wenn die Druckdifferenz eine vorbestimmte Druckdifferenz übersteigt, wobei vorzugsweise ein Druckverlauf, insbesondere eine Druckänderungsrate, derart eingestellt wird, dass im Wesentlichen kein sprungartiger Druckunterschied erfolgt. Ein sprungartiger Druckunterschied ist insbesondere dadurch gekennzeichnet, dass der Verlauf eine Sprungstelle und somit mathematisch ausgedrückt eine Unstetigkeitsstelle vorliegt. Das Ermitteln der Druckdifferenz umfasst vorzugsweise den Schritt: Erfassen eines Ist-Drucks des Fluids.

Das Dünnglasprodukt kann beispielsweise eine Bildschirmabdeckung für ein Smartphone, ein Bedienfeld im Automobilinterieur oder ein Kapselungsglas in medizinischen Sensoren sein oder ein Teil davon sein.

Das mit einem solchen Verfahren hergestellte Dünnglasprodukt zeichnet sich dadurch aus, dass dieses keinen Hinweis auf eine Nachbearbeitung aufweist, beispielsweise von einem Polieren der Oberfläche. Auch das Einbringen von Perforationen nach der Umformung ist üblicherweise zu erkennen, beispielsweise durch thermische Effekte an den Randzonen der von Lasern ausgeschnittenen Ausnehmungen. Ein derartig hergestelltes Dünnglasprodukt zeichnet sich somit insbesondere durch keine Beeinträchtigungen durch Polierbearbeitungen oder nachträgliche Beeinflussung durch Laserabtrag aus.

Das Verfahren und seine möglichen Fortbildungen weisen Merkmale beziehungsweise Verfahrensschritte auf, die sie insbesondere dafür geeignet machen, für eine Umformvorrichtung und ihre Fortbildungen verwendet zu werden. Für weitere Vorteile, Ausführungsvarianten und Ausführungsdetails der weiteren Aspekte und ihrer möglichen Fortbildungen wird auch auf die zuvor erfolgte Beschreibung zu den entsprechenden Merkmalen und Fortbildungen der Umformvorrichtung verwiesen.

Bevorzugte Ausführungsbeispiele werden exemplarisch anhand der beiliegenden Figuren erläutert. Es zeigen:
- Figur 1:: eine schematische, zweidimensionale Schnittansicht einer beispielhaften Ausführungsform einer Umformvorrichtung;
- Figur 2:: eine schematische, dreidimensionale Ansicht einer weiteren beispielhaften Ausführungsform einer Umformvorrichtung;
- Figur 3:: die Umformvorrichtung aus Figur 2 in einem geschlossenen Zustand;
- Figur 4:: die Umformvorrichtung aus Figur 2 mit druckbeaufschlagter Membran; und
- Figur 5:: ein schematisches Verfahren.

In den Figuren sind gleiche oder im Wesentlichen funktionsgleiche beziehungsweise -ähnliche Elemente mit den gleichen Bezugszeichen bezeichnet.

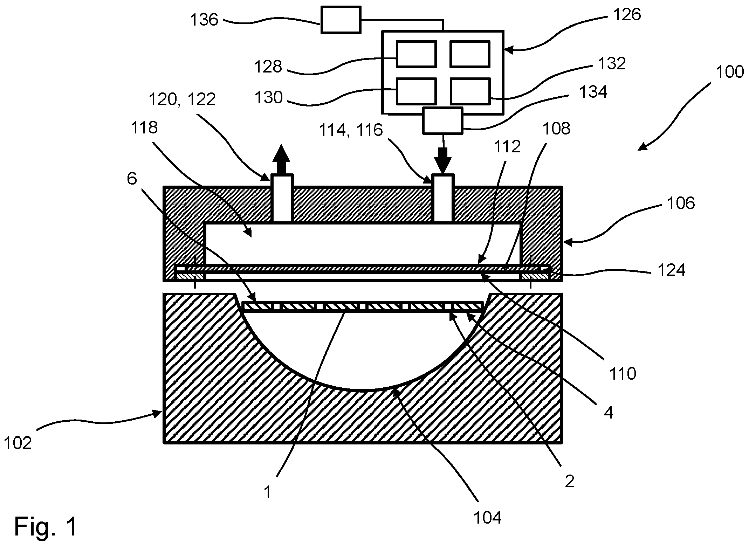

Figur 1 zeigt eine Umformvorrichtung 100 zum Umformen eines verformbaren Dünnglases 1. Das Dünnglas 1 weist Perforationen 2 auf. Das Dünnglas 1 weist eine der Kavität zugewandte Glasseite 4 und eine der Kavität abgewandte Glasseite 6 auf. Das Dünnglas 1 ist zwischen einer Kavität 104 einer Umformeinheit 102 und einer Membran 108 angeordnet.

Die Umformvorrichtung 100 umfasst ferner eine Membraneinheit 106, die die Membran 108 aufweist. Die Membran 108 weist eine der Kavität zugewandte erste Membranseite 110 und eine der Kavität abgewandte zweite Membranseite 112 auf. Die Membran 108 ist derart verformbar ausgebildet, dass diese in die Kavität 104 eindrückbar ist. Die Membran ist mittels einer Membranhalterung 124 positioniert.

Die Umformvorrichtung 100 weist darüber hinaus eine Fluideinstellungsvorrichtung 126 zur Einstellung mindestens einer Fluideigenschaft, hier vorliegend einer Temperatur und eines Drucks, eines der Membraneinheit 106 bereitzustellenden Fluides auf. Die Fluideinstellungsvorrichtung 126 weist eine Verdichtungseinheit 128 zum Verdichten des Fluids auf. Stromabwärts von der Verdichtungseinheit 128 ist eine erste Temperiereinheit 130 zur Erzeugung eines ersten Fluids mit einer ersten Temperatur angeordnet.

Ferner umfasst die Fluideinstellungsvorrichtung 126 eine zweite Temperiereinheit 132 zur Erzeugung eines zweiten Fluids mit einer zweiten Temperatur. Die zweite Temperiereinheit 132 ist stromabwärts von der Verdichtungseinheit 128 angeordnet und parallel zur ersten Temperiereinheit 130 angeordnet. Darüber hinaus umfasst die Fluideinstellungsvorrichtung 126 eine Mischeinheit 134, in der das erste Fluid der ersten Temperiereinheit 130 und das zweite Fluid der zweiten Temperiereinheit 132 vermischt werden. Die Mischeinheit 134 ist mit einem Fluideinlass 114 eines Druckraums 118 fluidisch gekoppelt. Darüber hinaus weist der Fluideinlass 114 einen Temperatursensor 116 zur Ermittlung der Temperatur des Fluides auf.

Durch den Fluideinlass 114 gelangt das Fluid in den Druckraum 118 der Membraneinheit 106. Der Druckraum 118 ist auf einer der Kavität 104 zugewandten Seite des Druckraums 118 durch die Membran 108 begrenzt. Durch das Einleiten eines druckbeaufschlagten Fluides in den Druckraum 118 erfolgt eine Beaufschlagung der zweiten Membranseite 112 mit einem Druck. Infolge des Druckes wird die Membran 108 in Richtung der Kavität 104 elastisch ausgedehnt. Bei entsprechend starker Auslenkung der Membran 108 erfasst diese das Dünnglas 1 und formt dieses in die Kavität 104 ein.

Um den Druck des Fluides in dem Druckraum 118 ferner einzustellen, umfasst die Fluideinstellungsvorrichtung 126 ein Druckeinstellventil 122 an einem Fluidauslass 120. Mit dem Druckeinstellventil 122, das vorzugsweise als Proportionalventil ausgebildet ist, kann der Druck in dem Druckraum 118 vorteilhaft gesteuert und/oder geregelt werden.

Darüber hinaus umfasst die Umformvorrichtung 100 eine Steuerungsvorrichtung 136. Die Steuerungsvorrichtung 136 ist zur Steuerung der Fluideinstellungsvorrichtung 126 ausgebildet, insbesondere um die Temperatur, einen Temperaturverlauf der Temperatur, den Druck und/oder einen Druckverlauf des Drucks des Fluides zu steuern und/oder zu regeln.

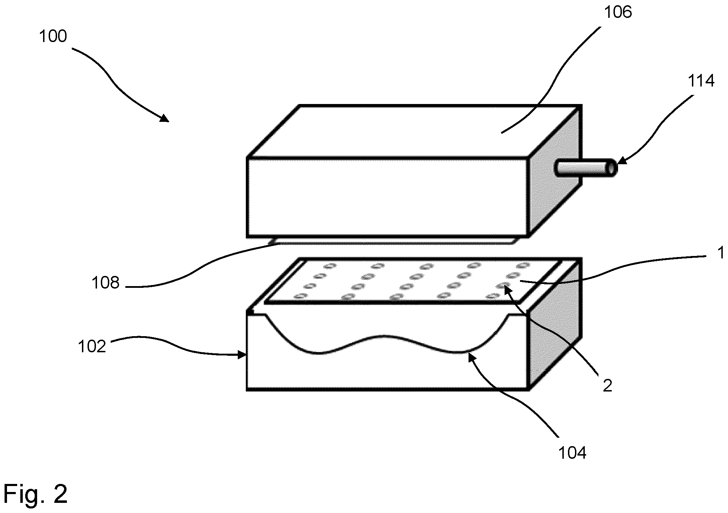

Figur 2 zeigt eine dreidimensionale Darstellung eines Teils der Umformvorrichtung 100. Die Membraneinheit 106 ist in vertikaler Richtung über der Umformeinheit 102 angeordnet. Die Membran 108 ist an der Membraneinheit 106 angeordnet. Darüber hinaus ist der Fluideinlass 114 der Membraneinheit 106 gezeigt. Ein Dünnglas 1 mit Perforationen 2 ist zwischen der Umformeinheit 102 mit der Kavität 104 und der Membran 108 angeordnet. Das Dünnglas 1 befindet sich in einem heißen, verformbaren Zustand.

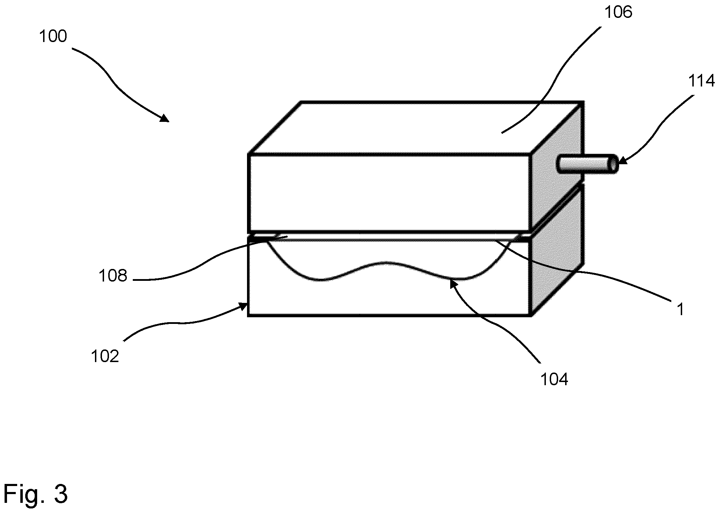

In Figur 3 wird die Umformvorrichtung 100 geschlossen, indem die Beabstandung zwischen der Membraneinheit 106 und der Umformeinheit 102 im Wesentlichen auf Null verringert wird. In diesem Zustand wird ein Fluid durch den Fluideinlass 114 in den nicht gezeigten Druckraum 118 eingeleitet.

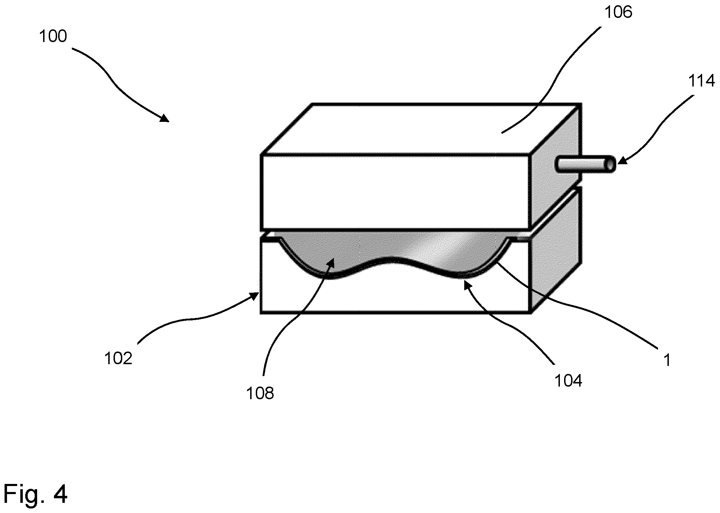

Infolgedessen wird die Membran 108 in die Kavität 104 eingeformt, wie es in der Figur 4 gezeigt ist. Da sich das Dünnglas 1 zwischen der Kavität 104 und der Membran 108 befindet, wird das Dünnglas 1 ebenfalls in die Kavität 104 eingeformt und somit umgeformt.

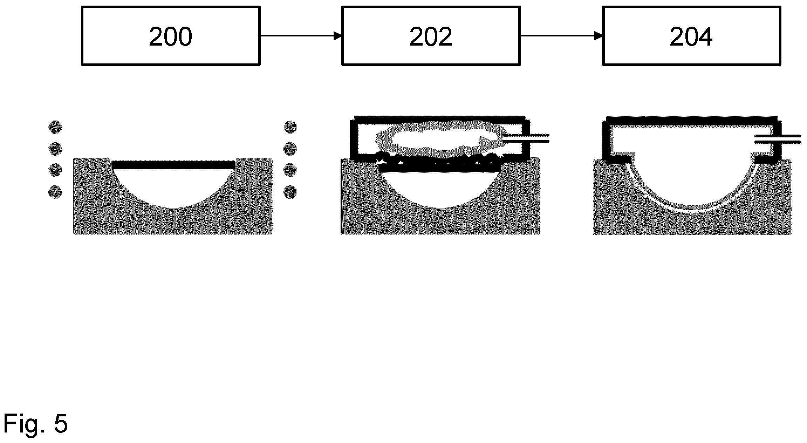

Figur 5 zeigt ein schematisches Verfahren. In Schritt 200 wird das in der Umformeinheit bereits eingelegte Dünnglas 1 mit hier als Punkten dargestellten Heizelementen aufgeheizt. In Schritt 202 wird die Umformvorrichtung geschlossen, indem die Membraneinheit 106 auf die Umformeinheit 102 zubewegt wird. Ferner wird durch den Fluideinlass 114 ein Fluid in den Druckraum 118 eingelassen, sodass sich, wie in Schritt 204 gezeigt ist, die Membran 108 in die Kavität 104 einformt und somit das zwischen Kavität 104 und Membran 108 befindliche Dünnglas 1 ebenfalls eingeformt wird.

Mit dem im Vorherigen beschriebenen Verfahren und bei der Anwendung der im Vorherigen beschriebenen Umformvorrichtung 100 wird ein Dünnglas 1, insbesondere ein perforiertes Dünnglas, derart umgeformt, dass Nachbearbeitungsschritte entfallen können. Insbesondere wird durch das beschriebene Verfahren eine hohe Oberflächenqualität des umgeformten Dünnglases 1 ermöglicht, sodass keine Polierbearbeitung der Oberfläche im Nachhinein erforderlich ist. Durch den Wegfall weiterer Prozessschritte wird das Umformen des Glases mit einer hohen Wirtschaftlichkeit ermöglicht. Insbesondere durch die Möglichkeit, die Umformvorrichtung 100 im Rahmen eines nicht-isothermen Prozesses einzusetzen, wird die Wirtschaftlichkeit weiter erhöht.

### BEZUGSZEICHEN

- 1: Dünnglas
- 2: Perforation
- 4: Kavität zugewandte Glasseite
- 6: Kavität abgewandte Glasseite
- 100: Umformvorrichtung
- 102: Umformeinheit
- 104: Kavität
- 106: Membraneinheit
- 108: Membran
- 110: erste Membranseite
- 112: zweite Membranseite
- 114: Fluideinlass
- 116: Temperatursensor
- 118: Druckraum
- 120: Fluidauslass
- 122: Druckeinstellventil
- 124: Membranhalterung
- 126: Fluideinstellungsvorrichtung
- 128: Verdichtungseinheit
- 130: erste Temperiereinheit
- 132: zweite Temperiereinheit
- 134: Mischeinheit
- 136: Steuerungsvorrichtung

## Patentansprüche

1. Umformvorrichtung (100) zum Umformen eines verformbaren Dünnglases (1), umfassend
- eine Umformeinheit (102) mit einer Kavität (104) zum Umformen des Dünnglases (1),
- eine Membraneinheit (106) mit einer verformbaren Membran (108), die eine der Kavität (104) zugewandte erste Membranseite (110) und eine der Kavität (104) abgewandte zweite Membranseite (112) aufweist,
- eine Fluideinstellungsvorrichtung (126) zur Einstellung mindestens einer Fluideigenschaft eines der Membraneinheit (106) bereitzustellenden Fluides,
- wobei das Dünnglas (1) zwischen der ersten Membranseite (110) und der Kavität (104) anordenbar ist,
- wobei die Membraneinheit (106) angeordnet und ausgebildet ist, um die zweite Membranseite (112) der Membran (108) mittels des Fluides mit einem Druck zu beaufschlagen, sodass das Dünnglas (1) mittels der Membran (108) in die Kavität (104) einformbar ist,
- **gekennzeichnet durch** eine Steuerungsvorrichtung, die eingerichtet ist, die Fluideinstellungsvorrichtung derart anzusteuern und/oder zu regeln, dass ein Druckverlauf des Drucks mit einem Druckaufbauabschnitt, einem Umformdruckabschnitt, einem Haltedruckabschnitt und einem Druckabbauabschnitt in dieser Reihenfolge zeitlich aufeinanderfolgend gesteuert und/oder geregelt wird, wobei die Fluideigenschaft ein Druckverlauf des Drucks ist, und/oder
- **gekennzeichnet dadurch, dass** die Fluideigenschaft ein Temperaturverlauf der Temperatur ist.

2. Umformvorrichtung (100) nach dem vorherigen Anspruch 1, wobei
- die Membran (108) ein Glaskontaktmaterial aufweist oder aus einem Glaskontaktmaterial besteht, und/oder
- die Membran (108) elastisch ausgebildet ist, und/oder
- die Membran (108) eine erste der Kavität (104) zugewandte Membranschicht und eine zweite der Kavität (104) abgewandte Membranschicht aufweist, wobei die erste Membranschicht ein Glaskontaktmaterial umfasst oder aus diesem besteht und/oder wobei die zweite Membranschicht ein Elastomermaterial aufweist oder aus einem Elastomermaterial besteht.

3. Umformvorrichtung (100) nach einem der vorherigen Ansprüche, wobei die Membraneinheit (106) einen Druckraum (118) aufweist, der von der Membran (108) auf einer der Kavität (104) zugewandten Seite im Wesentlichen fluiddicht abgeschlossen wird und wobei vorzugsweise ein Fluideinlass (114) mit dem Druckraum (118) derart fluidisch gekoppelt ist, dass ein Fluid in den Druckraum (118) einleitbar ist.

4. Umformvorrichtung (100) nach dem vorherigen Anspruch 3, wobei
- die Fluideinstellungsvorrichtung (126) ein Druckeinstellventil aufweist, das eingerichtet ist, um einen vorbestimmten Druck im Druckraum (118) einzustellen, und
- vorzugsweise das Druckeinstellventil (122) als Proportionalventil zur Einstellung eines vordefinierten Druckverlaufs, insbesondere einer Druckänderungsrate, ausgebildet ist.

5. Umformvorrichtung (100) nach einem der vorherigen Ansprüche, wobei die Membraneinheit (106) eine Membranhalterung (124) aufweist, die angeordnet und ausgebildet ist, die Membran (108) in einer vorbestimmten Position zu positionieren und vorzugsweise einen fluiddichten Abschluss des Druckraumes (118) auszubilden.

6. Umformvorrichtung (100) nach einem der vorherigen Ansprüche, wobei die Fluideinstellungsvorrichtung (126) eine Verdichtungseinheit (128) zum Verdichten des Fluids und/oder eine erste Temperiereinheit (130) zur Erzeugung eines ersten Fluids mit einer ersten Temperatur aufweist.

7. Umformvorrichtung (100) nach einem der vorherigen Ansprüche, wobei
- die Fluideinstellungsvorrichtung (126) eine zweite Temperiereinheit (132) zur Erzeugung eines zweiten Fluids mit einer zweiten Temperatur, die niedriger als die erste Temperatur ist, aufweist, und/oder
- die Fluideinstellungsvorrichtung (126) eine Mischeinheit (134) zum Mischen des ersten Fluids und des zweiten Fluids aufweist.

8. Umformvorrichtung (100) nach einem der vorherigen Ansprüche, umfassend eine Steuerungsvorrichtung (136), die eingerichtet ist, die Fluideinstellungsvorrichtung (126) derart zu steuern, dass das in den Druckraum (118) geleitete Fluid einen vorbestimmten Druck und/oder eine vorbestimmte Temperatur aufweist.

9. Umformvorrichtung (100) nach einem der vorherigen Ansprüche, wobei die Steuerungsvorrichtung (136) eingerichtet ist,
- eine Temperaturdifferenz zwischen einer Ist-Temperatur des Fluids und einer Soll-Temperatur des Fluids zu ermitteln und die Ist-Temperatur des Fluids durch eine Temperierung einzustellen, insbesondere zu erhöhen oder zu reduzieren, wenn die Temperaturdifferenz eine vorbestimmte Temperaturdifferenz übersteigt, und/oder
- eine Druckdifferenz zwischen einem Ist-Druck des Fluides und einem Soll-Druck des Fluides zu ermitteln und den Ist-Druck des Fluides durch eine Druckveränderung, insbesondere durch Ansteuerung des Druckeinstellventils (122) und/oder der Verdichtungseinheit (128), einzustellen, insbesondere zu erhöhen oder zu reduzieren, wenn die Druckdifferenz eine vorbestimmte Druckdifferenz übersteigt.

10. Umformvorrichtung (100) nach einem der vorherigen Ansprüche, umfassend einen Temperatursensor (116), der eingerichtet ist, eine Ist-Temperatur des Fluids in und/oder stromabwärts von der Mischeinheit (134) zu ermitteln, wobei die Steuerungsvorrichtung (136) vorzugsweise eingerichtet ist, eine Temperaturdifferenz der Ist-Temperatur zu einer vordefinierten Soll-Temperatur zu ermitteln und bei Überschreiten einer vordefinierten Temperaturdifferenz die Fluideinstellungsvorrichtung (126) derart anzusteuern, dass durch eine Reduktion der Ist-Temperatur die Temperaturdifferenz geringer als die vordefinierte Temperaturdifferenz eingestellt wird, wobei vorzugsweise die Steuerungsvorrichtung (136) eingerichtet ist, die zweite Temperiereinheit (132) anzusteuern, um die zweite Temperatur zu variieren, und/oder die Mischeinheit (134) anzusteuern, um einen Volumenstrom des zweiten Fluids in die Mischeinheit (134) zu steuern.

11. Umformvorrichtung (100) nach einem der vorherigen Ansprüche, wobei die Umformeinheit (102) austauschbar angeordnet ist.

12. Verfahren zum Umformen eines Dünnglases (1), insbesondere mit einer Umformvorrichtung (100) nach einem der vorherigen Ansprüche 1-11, umfassend die Schritte:
- Anordnen eines verformbaren Dünnglases (1) zwischen einer Umformeinheit (102) mit einer Kavität (104) und einer verformbaren Membran (108), sodass eine erste Membranseite (110) dem Dünnglas (1) zugewandt und eine zweite Membranseite (112) dem Dünnglas (1) abgewandt ist,
- Beaufschlagen der zweiten Membranseite (112) mit einem Druck mittels eines Fluides, sodass das Dünnglas (1) mittels der Membran (108) in die Kavität (104) eingeformt wird, und
- Einstellen mindestens einer Fluideigenschaft des Fluides,
- **dadurch gekennzeichnet, dass** die Fluideigenschaft ein Druckverlauf des Drucks ist und die Fluideinstellungsvorrichtung derart angesteuert wird und/oder geregelt wird, dass ein Druckverlauf des Drucks mit einem Druckaufbauabschnitt, einem Umformdruckabschnitt, einem Haltedruckabschnitt und einem Druckabbauabschnitt in dieser Reihenfolge zeitlich aufeinanderfolgend gesteuert und/oder geregelt wird und/oder dass die Fluideigenschaft ein Temperaturverlauf der Temperatur ist.

13. Verfahren nach dem vorherigen Anspruch 12, wobei die Fluideigenschaft ein Druck, ein Druckverlauf des Drucks, eine Temperatur und/oder ein Temperaturverlauf der Temperatur des Fluides ist oder umfasst.

14. Verfahren nach einem der vorherigen Ansprüche 12-13, umfassend die Schritte:
- Ermitteln einer Temperaturdifferenz zwischen einer Ist-Temperatur des Fluids und einer Soll-Temperatur des Fluids, und
- Einstellen, insbesondere Erhöhen oder Reduzieren, der Ist-Temperatur des Fluids durch eine Temperierung, wenn die Temperaturdifferenz eine vorbestimmte Temperaturdifferenz übersteigt.

15. Verfahren nach einem der vorherigen Ansprüche 12-14, umfassend die Schritte:
- Ermitteln einer Druckdifferenz zwischen einem Ist-Druck des Fluids und einem Soll-Druck des Fluids, und
- Einstellen, insbesondere Erhöhen oder Reduzieren, des Ist-Drucks des Fluids, wenn die Druckdifferenz eine vorbestimmte Druckdifferenz übersteigt,
- wobei vorzugsweise ein Druckverlauf, insbesondere eine Druckänderungsrate, derart eingestellt wird, dass im Wesentlichen kein sprungartiger Druckunterschied erfolgt.

## Claims

1. Forming apparatus (100) for forming a deformable thin glass (1), comprising
- a forming unit (102) with a cavity (104) for forming the thin glass (1),
- a membrane unit (106) with a deformable membrane (108), which has a first membrane side (110) facing the cavity (104) and a second membrane side (112) facing away from the cavity (104),
- a fluid adjusting device (126) for adjusting at least one fluid property of a fluid to be provided to the membrane unit (106),
- wherein the thin glass (1) can be arranged between the first membrane side (110) and the cavity (104),
- wherein the membrane unit (106) is arranged and configured to apply a pressure to the second membrane side (112) of the membrane (108) by means of the fluid, so that the thin glass (1) can be molded into the cavity (104) by means of the membrane (108),
- **characterized by** a control device which is adapted to control and/or loop-control the fluid adjustment device such that a pressure curve of the pressure with a pressure build-up section, a forming pressure section, a holding pressure section and a pressure reduction section is controlled and/or loop-controlled in this order in succession in time, the fluid property being a pressure curve of the pressure, and/or
- **characterized in that** the fluid property is a temperature profile of the temperature.

2. Forming apparatus (100) according to the preceding claim 1, wherein
- the membrane (108) has a glass contact material or consists of a glass contact material, and/or
- the membrane (108) is configured to be elastic, and/or
- the membrane (108) has a first membrane layer facing the cavity (104) and a second membrane layer facing away from the cavity (104), wherein the first membrane layer comprises or consists of a glass contact material and/or wherein the second membrane layer comprises or consists of an elastomeric material.

3. Forming apparatus (100) according to any one of the preceding claims, wherein the diaphragm unit (106) has a pressure chamber (118) which is closed off in a substantially fluid-tight manner by the diaphragm (108) on a side facing the cavity (104) and wherein preferably a fluid inlet (114) is fluidically coupled to the pressure chamber (118) in such a way that a fluid can be introduced into the pressure chamber (118).

4. Forming apparatus (100) according to the preceding claim 3, wherein
- the fluid adjusting device (126) has a pressure adjusting valve adapted to adjust a predetermined pressure in the pressure chamber (118), and
- preferably the pressure setting valve (122) is configured as a proportional valve for setting a predefined pressure curve, in particular a pressure change rate.

5. Forming apparatus (100) according to any one of the preceding claims, wherein the membrane unit (106) has a membrane holder (124) which is arranged and configured to position the membrane (108) in a predetermined position and preferably to form a fluid-tight closure of the pressure chamber (118).

6. Forming apparatus (100) according to any one of the preceding claims, wherein the fluid setting device (126) has a compression unit (128) for compressing the fluid and/or a first temperature control unit (130) for generating a first fluid having a first temperature.

7. Forming apparatus (100) according to any one of the preceding claims, wherein
- the fluid adjusting device (126) has a second temperature control unit (132) for generating a second fluid having a second temperature lower than the first temperature, and/or
- the fluid adjusting device (126) has a mixing unit (134) for mixing the first fluid and the second fluid.

8. Forming apparatus (100) according to any one of the preceding claims, comprising a control device (136) adapted to control the fluid adjustment device (126) such that the fluid directed into the pressure chamber (118) has a predetermined pressure and/or a predetermined temperature.

9. Forming apparatus (100) according to any one of the preceding claims, wherein the control device (136) is adapted,
- to determine a temperature difference between an actual temperature of the fluid and a target temperature of the fluid and to adjust the actual temperature of the fluid by means of temperature control, in particular to increase or reduce it if the temperature difference exceeds a predetermined temperature difference, and/or
- to determine a pressure difference between an actual pressure of the fluid and a desired pressure of the fluid and to adjust the actual pressure of the fluid by changing the pressure, in particular by actuating the pressure adjustment valve (122) and/or the compression unit (128), in particular to increase or reduce it if the pressure difference exceeds a predetermined pressure difference.

10. Forming apparatus (100) according to any one of the preceding claims, comprising a temperature sensor (116) which is adapted to determine an actual temperature of the fluid in and/or downstream of the mixing unit (134), the control device (136) preferably being adapted to determine a temperature difference between the actual temperature and a predefined target temperature and, if a predefined temperature difference is exceeded, to actuate the fluid setting device (126) in such a way that the temperature difference is set lower than the predefined temperature difference by reducing the actual temperature, the control device (136) preferably being adapted to control the second temperature control unit (132) in order to vary the second temperature and/or to control the mixing unit (134) in order to control a volume flow of the second fluid into the mixing unit (134).

11. Forming apparatus (100) according to any one of the preceding claims, wherein the forming unit (102) is interchangeably arranged.

12. Method for forming a thin glass (1), in particular with a forming apparatus (100) according to any one of the preceding claims 1-11, comprising the steps of:
- Arrangement of a deformable thin glass (1) between a forming unit (102) with a cavity (104) and a deformable membrane (108), so that a first membrane side (110) faces the thin glass (1) and a second membrane side (112) faces away from the thin glass (1),
- applying a pressure to the second membrane side (112) by means of a fluid, so that the thin glass (1) is molded into the cavity (104) by means of the membrane (108), and
- Adjustment of at least one fluid property of the fluid,
- **characterized in that** the fluid property is a pressure curve of the pressure and the fluid adjustment device is actuated and/or loop-controlled in such a way that a pressure curve of the pressure with a pressure build-up section, a forming pressure section, a holding pressure section and a pressure reduction section is controlled and/or loop-controlled in this sequence in succession and/or **in that** the fluid property is a temperature curve of the temperature.

13. Method according to any one of the preceding claims 12, wherein the fluid property is or comprises a pressure, a pressure profile of the pressure, a temperature and/or a temperature profile of the temperature of the fluid.

14. Method according to any one of the preceding claims 12-13, comprising the steps of:
- Determining a temperature difference between an actual temperature of the fluid and a target temperature of the fluid, and
- Adjusting, in particular increasing or reducing, the actual temperature of the fluid by means of temperature control if the temperature difference exceeds a predetermined temperature difference.

15. Method according to any one of the preceding claims 12-14, comprising the steps of:
- Determining a pressure difference between an actual pressure of the fluid and a target pressure of the fluid, and
- Adjusting, in particular increasing or reducing, the actual pressure of the fluid when the pressure difference exceeds a predetermined pressure difference,
- whereby preferably a pressure curve, in particular a pressure change rate, is set such that there is essentially no sudden pressure difference.

## Revendications

1. Appareil de formage (100) pour former un verre mince déformable (1), comprenant
- une unité de formage (102) avec une cavité (104) pour former le verre mince (1),
- une unité de membrane (106) avec une membrane déformable (108), qui a un premier côté de membrane (110) orienté vers la cavité (104) et un second côté de membrane (112) orienté à l'opposé de la cavité (104),
- un dispositif de réglage du fluide (126) pour régler au moins une propriété du fluide à fournir à l'unité de membrane (106),
- le verre mince (1) peut être disposé entre le premier côté de la membrane (110) et la cavité (104),
- dans lequel l'unité de membrane (106) est disposée et configurée pour appliquer une pression sur le second côté de la membrane (112) de la membrane (108) au moyen du fluide, de sorte que le verre mince (1) puisse être moulé dans la cavité (104) au moyen de la membrane (108),
- **caractérisé par** un dispositif de commande qui est adapté pour commander et/ou contrôler en boucle le dispositif de réglage du fluide de sorte qu'une courbe de pression de la pression avec une section de montée en pression, une section de pression de formation, une section de pression de maintien et une section de réduction de pression est commandée et/ou contrôlée en boucle dans cet ordre successif dans le temps, la propriété du fluide étant une courbe de pression de la pression, et/ou
- **caractérisé par le fait que** la propriété du fluide est un profil de température de la température.

2. Appareil de formage (100) selon la revendication précédente 1, dans lequel
- la membrane (108) a un matériau de contact en verre ou est constituée d'un matériau de contact en verre, et/ou
- la membrane (108) est configurée pour être élastique, et/ou
- la membrane (108) comporte une première couche de membrane orientée vers la cavité (104) et une seconde couche de membrane orientée à l'opposé de la cavité (104), la première couche de membrane comprenant ou étant constituée d'un matériau de contact en verre et/ou la seconde couche de membrane comprenant ou étant constituée d'un matériau élastomère.

3. Appareil de formage (100) selon l'une quelconque des revendications précédentes, dans lequel l'unité à diaphragme (106) possède une chambre de pression (118) qui est fermée de manière sensiblement étanche aux fluides par le diaphragme (108) sur un côté faisant face à la cavité (104) et dans lequel, de préférence, une entrée de fluide (114) est couplée fluidiquement à la chambre de pression (118) de manière à ce qu'un fluide puisse être introduit dans la chambre de pression (118).

4. Appareil de formage (100) selon la revendication 3 précédente, dans lequel
- le dispositif de réglage du fluide (126) comporte une soupape de réglage de la pression adaptée au réglage d'une pression prédéterminée dans la chambre de pression (118), et
- de préférence, la soupape de réglage de la pression (122) est configurée comme une soupape proportionnelle pour régler une courbe de pression prédéfinie, en particulier un taux de variation de la pression

5. Appareil de formage (100) selon l'une quelconque des revendications précédentes, dans lequel l'unité de membrane (106) comporte un support de membrane (124) qui est disposé et configuré pour positionner la membrane (108) dans une position prédéterminée et, de préférence, pour former une fermeture étanche au fluide de la chambre de pression (118).

6. Appareil de formage (100) selon l'une quelconque des revendications précédentes, dans lequel le dispositif de mise en place du fluide (126) comporte une unité de compression (128) pour comprimer le fluide et/ou une première unité de contrôle de la température (130) pour générer un premier fluide ayant une première température

7. Appareil de formage (100) selon l'une quelconque des revendications précédentes, dans lequel
- le dispositif de réglage du fluide (126) comporte une deuxième unité de contrôle de la température (132) pour générer un deuxième fluide ayant une deuxième température inférieure à la première température, et/ou
- le dispositif de réglage du fluide (126) comporte une unité de mélange (134) pour mélanger le premier fluide et le second fluide.

8. Appareil de formage (100) selon l'une quelconque des revendications précédentes, comprenant un dispositif de commande (136) adapté pour commander le dispositif d'ajustement du fluide (126) de sorte que le fluide dirigé dans la chambre de pression (118) présente une pression prédéterminée et/ou une température prédéterminée

9. Appareil de formage (100) selon l'une quelconque des revendications précédentes, dans lequel le dispositif de commande (136) est adapté,
- déterminer une différence de température entre une température réelle du fluide et une température cible du fluide et ajuster la température réelle du fluide au moyen d'une régulation de température, notamment pour l'augmenter ou la réduire si la différence de température dépasse une différence de température prédéterminée, et/ou
- déterminer une différence de pression entre une pression réelle du fluide et une pression souhaitée du fluide et ajuster la pression réelle du fluide en modifiant la pression, notamment en actionnant la soupape de réglage de la pression (122) et/ou l'unité de compression (128), en particulier pour l'augmenter ou la réduire si la différence de pression dépasse une différence de pression prédéterminée.

10. Appareil de formage (100) selon l'une quelconque des revendications précédentes, comprenant un capteur de température (116) qui est adapté pour déterminer une température réelle du fluide dans et/ou en aval de l'unité de mélange (134), le dispositif de contrôle (136) étant de préférence adapté pour déterminer une différence de température entre la température réelle et une température cible prédéfinie et, si une différence de température prédéfinie est dépassée, d'actionner le dispositif de réglage du fluide (126) de manière à ce que la différence de température soit inférieure à la différence de température prédéfinie en réduisant la température réelle, le dispositif de commande (136) étant de préférence adapté pour contrôler la deuxième unité de contrôle de la température (132) afin de faire varier la deuxième température et/ou pour contrôler l'unité de mélange (134) afin de contrôler un débit volumétrique du deuxième fluide dans l'unité de mélange (134).

11. Appareil de formage (100) selon l'une quelconque des revendications précédentes, dans lequel l'unité de formage (102) est disposée de manière interchangeable.

12. Procédé de formage d'un verre mince (1), notamment avec un appareil de formage (100) selon l'une quelconque des revendications précédentes 1-11, comprenant les étapes de
- Disposition d'un verre mince déformable (1) entre une unité de formage (102) avec une cavité (104) et une membrane déformable (108), de sorte qu'un premier côté de la membrane (110) soit orienté vers le verre mince (1) et qu'un second côté de la membrane (112) soit orienté à l'opposé du verre mince (1),
- appliquer une pression sur le deuxième côté de la membrane (112) au moyen d'un fluide, de sorte que le verre mince (1) soit moulé dans la cavité (104) au moyen de la membrane (108), et
- Ajustement d'au moins une propriété du fluide,
- **caractérisé par le fait que** la propriété du fluide est une courbe de pression de la pression et que le dispositif de réglage du fluide est actionné et/ou contrôlé en boucle de telle sorte qu'une courbe de pression de la pression avec une section de montée en pression, une section de pression de formage, une section de pression de maintien et une section de réduction de la pression est contrôlée et/ou contrôlée en boucle dans cette séquence successive et/ou **par le fait que** la propriété du fluide est une courbe de température de la température

13. Procédé selon l'une quelconque des revendications précédentes 12, dans lequel la propriété du fluide est ou comprend une pression, un profil de pression de la pression, une température et/ou un profil de température de la température du fluide.

14. Procédé selon l'une quelconque des revendications précédentes 12-13, comprenant les étapes suivantes :
- Détermination d'une différence de température entre une température réelle du fluide et une température cible du fluide, et
- Ajuster, en particulier augmenter ou réduire, la température réelle du fluide au moyen d'un régulateur de température si la différence de température dépasse une différence de température prédéterminée.

15. Procédé selon l'une quelconque des revendications précédentes 12 à 14, comprenant les étapes suivantes :
- Détermination d'une différence de pression entre une pression réelle du fluide et une pression cible du fluide, et
- Ajuster, en particulier augmenter ou réduire, la pression réelle du fluide lorsque la différence de pression dépasse une différence de pression prédéterminée,
- De préférence, la courbe de pression, en particulier le taux de variation de la pression, est réglée de manière à ce qu'il n'y ait pratiquement pas de différence de pression soudaine.
